(19) Europäisches Patentamt
European Patent Office
Office européen des brevets

(11) **EP 0 732 010 B1**

(12) **EUROPÄISCHE PATENTSCHRIFT**

(45) Veröffentlichungstag und Bekanntmachung des Hinweises auf die Patenterteilung:
**15.03.2006 Patentblatt 2006/11**

(51) Int Cl.:
***H04B 1/40*** *(2006.01)*

(21) Anmeldenummer: **95901339.2**

(86) Internationale Anmeldenummer:
**PCT/DE1994/001413**

(22) Anmeldetag: **29.11.1994**

(87) Internationale Veröffentlichungsnummer:
**WO 1995/015620 (08.06.1995 Gazette 1995/24)**

(54) **FUNKGERÄT**

RADIO SET

APPAREIL RADIO

(84) Benannte Vertragsstaaten:
**DE FR GB IT SE**

(30) Priorität: **04.12.1993 DE 4341435**

(43) Veröffentlichungstag der Anmeldung:
**18.09.1996 Patentblatt 1996/38**

(73) Patentinhaber: **SIEMENS AKTIENGESELLSCHAFT**
**80333 München (DE)**

(72) Erfinder: **HOF, Manfred**
**D-13629 Berlin (DE)**

(56) Entgegenhaltungen:
**EP-A- 0 398 688          EP-A- 0 541 305**
**WO-A-92/02991          US-A- 3 983 484**
**US-A- 4 802 235**

**Beschreibung**

Die Erfindung geht aus von einem Funkgerät nach der Gattung des Hauptanspruchs.

Für Funknetze sind verschiedene Standards bekanntgeworden, bei welchen eine große Zahl von Übertragungskanälen durch Frequenz- und Zeitmultiplex geschaffen wird. Bei dem GSM-Standard, der im D1-Netz verwendet wird, werden Frequenzen von 890 MHz bis 915 MHz mit einem Raster von 200 kHz zur Übertragung von Mobilfunkstationen zu Basisstationen und Frequenzen von 935 MHz bis 960 MHz ebenfalls im Raster von 200 kHz zur Übertragung von den Basisstationen zu den Mobilfunkstationen verwendet. Für einen neueren Standard, dem DMCS 1800, sind Frequenzen zwischen 1710 MHz und 1785 MHz bzw. 1805 MHz bis 1880 MHz ebenfalls mit einem Kanalabstand von 200 kHz vorgesehen.

Dokument EP-A-541 305 (Nokia Mobile Phones, 12 Mai 1993) offenbart ein Funkgerät, das einen ersten Oszillator und einen zweiten Oszillator enthält. Die Frequenzen der Oszillatoren sind derart ausgewählt, daß eine Differenz der Frequenzen eine Sendefrequenz in einem unteren Frequenzbereich und eine Summe der Frequenzen eine Sendefrequenz in einem oberen Frequenzbereich ergibt. Die beiden Oszillatoren sind über Frequenzteiler mit einem Referenzoszillator verkoppelt.

Wegen der Zeitmultiplex-Übertragung innerhalb der einzelnen durch die Trägerfrequenz bedingten Kanäle ist sowohl senderseitig als auch empfangsseitig eine genaue Takt- und Frequenzaufbereitung im Funkgerät erforderlich.

Aufgabe der vorliegenden Erfindung ist es, die Frequenz- und Taktaufbereitung in einem Funkgerät mit einer möglichst niedrigen Zahl von Komponenten derart auszugestalten, daß für verschiedene Frequenzbereiche, insbesondere diejenigen des GSM-Standards und des DMCS-1800-Standards, die wichtigsten Komponenten, wie beispielsweise Oszillatoren oder Filter, weitgehend baugleich sind.

Diese Aufgabe wird bei dem erfindungsgemäßen Funkgerät durch die im kennzeichnenden Teil des Patentanspruchs 1 angegebenen Maßnahmen gelöst.

Das erfindungsgemäße Funkgerät hat den Vorteil, daß für beide Frequenzbereiche die gleichen Oszillatoren und damit verbundene Schaltungen verwendet werden können.

Eine Weiterbildung des erfindungsgemäßen Funkgerätes besteht darin, daß zum Empfang eine Zwischenfrequenz als Differenz der Frequenz des empfangenen Signals und der Frequenz des zweiten steuerbaren Oszillators gebildet wird. Dadurch ist auch im Empfangsteil die Verwendung von gleichen Selektionsmitteln möglich.

Bei dieser Weiterbildung kann vorzugsweise vorgesehen sein, daß durch Differenzbildung aus der Zwischenfrequenz und der Frequenz des ersten steuerbaren Oszillators eine weitere Zwischenfrequenz erzeugt wird. Dieses hat den Vorteil, daß eine anschließende Demodulation mit einer relativ niedrigen Frequenz erfolgen kann. Vorzugsweise wird das Signal mit der weiteren Zwischenfrequenz quadraturdemoduliert, wobei ein zur Quadraturdemodulation erforderlicher Referenzträger durch einen dritten steuerbaren Oszillator erzeugt wird, der mit dem ersten steuerbaren Oszillator verkoppelt ist.

Eine andere Weiterbildung der Erfindung besteht darin, daß der zweite steuerbare Oszillator mit Hilfe einer Phasenvergleichsschaltung steuerbar ist, welcher das durch einen ersten Frequenzteiler bezüglich der Frequenz geteilte Ausgangssignal des ersten steuerbaren Oszillators und das durch einen zweiten Frequenzteiler bezüglich der Frequenz geteilte Ausgangssignal des zweiten steuerbaren Oszillators zuführbar ist. Vorzugsweise ist das Teilerverhältnis des zweiten Frequenzteilers steuerbar.

Durch diese Weiterbildung ist durch eine Einstellung des Teilerverhältnisses mit Hilfe eines Mikroprozessors, der auch weitere Funktionen des Funkgerätes steuert, eine einfache Wahl des Funkkanals möglich. Deshalb weisen vorzugsweise die bezüglich der Frequenz geteilten der Phasenvergleichsschaltung zuführbaren Signale eine Frequenz entsprechend dem Kanalraster auf.

Bei dem erfindungsgemäßen Funkgerät kann der zweite steuerbare Oszillator sowohl zum Senden als auch zum Empfangen benutzt werden. Die in dem jeweiligen Zeitschlitz zum Senden und zum Empfangen erforderliche Frequenz wird dann durch ein entsprechendes Setzen des Frequenzteilers vom Mikroprozessor eingestellt. Je nach Voraussetzungen im Einzelfall kann gemäß einer anderen Weiterbildung der Erfindung zum Senden und zum Empfangen jeweils ein zweiter steuerbarer Oszillator mit je einer Phasenvergleichsschaltung und je einem zweiten Frequenzteiler vorgesehen sein.

Eine vorteilhafte Ausgestaltung der Erfindung besteht darin, daß zur Regelung der Frequenz des ersten steuerbaren Oszillators ein Mikroprozessor durch Vergleich zwischen dem Systemtakt des empfangenen Signals und der Systemreferenzfrequenz und durch Temperaturmessung ein Steuersignal für den ersten steuerbaren Oszillator erzeugt, das über einen Digital/Analog-Wandler dem ersten steuerbaren Oszillator zuführbar ist. Damit ist eine ausgezeichnete Stabilität der Frequenz des ersten steuerbaren Oszillators erzielbar.

Entsprechend dem GSM- und dem DMCS-1800-Standard mit einem unteren Frequenzbereich von 890 MHz bis 915 MHz zum Senden und von 935 MHz bis 960 MHz zum Empfangen bzw. mit einem oberen Frequenzbereich von 1710 MHz bis 1785 MHz zum Senden und von 1805 MHz bis 1880 MHz zum Empfangen und mit einem Systemtakt von 13 MHz ist bei einer weiteren vorteilhaften Ausführungsform vorgesehen, daß die Frequenz des ersten steuerbaren Oszillators ein ganzzahliges Vielfaches von 13 MHz ist, vorzugsweise das 33-fache.

Ausführungsbeispiele der Erfindung sind in der Zeichnung anhand mehrerer Figuren dargestellt und in der nachfolgenden Beschreibung näher erläutert. Es zeigt:

Fig. 1 ein Blockschaltbild eines ersten Ausführungsbeispiels und

Fig. 2 ein Blockschaltbild eines zweiten Ausführungsbeispiels.

Gleiche Teile sind in den Figuren mit gleichen Bezugszeichen versehen. Die Figuren stellen die zur Erläuterung der Erfindung erforderlichen Teile eines Funkgerätes dar, wobei der Übersichtlichkeit halber weitere Einrichtungen, wie beispielsweise Bedieneinrichtungen, die verarbeitung der NF-Signale und die für die Zeitmultiplex-Technik erforderliche Steuerung, im einzelnen nicht dargestellt sind.

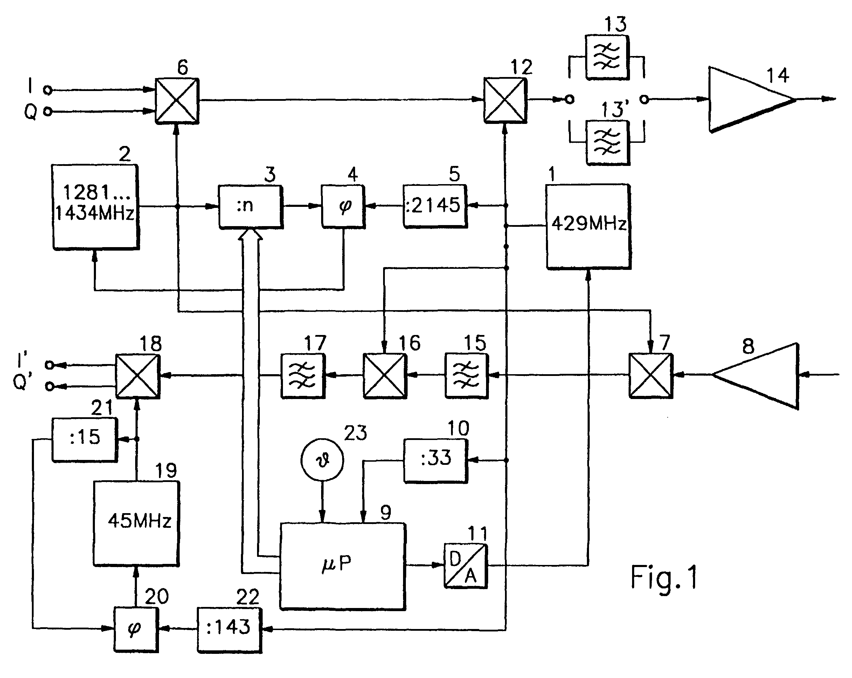

In dem in Fig. 1 dargestellten Funkgerät ist ein erster steuerbarer Oszillator 1 vorgesehen, der mit einer festen Frequenz von 429 MHz arbeitet. Dieses ist das 33-fache von 13 MHz, nämlich von dem im GSM-Standard festgelegten Systemtakt.

Ein zweiter steuerbarer Oszillator 2 ist im Bereich von 1281 MHz bis 1434 MHz in Schritten zu jeweils 200 kHz abstimmbar. Der Oszillator 2 ist über einen einstellbaren Frequenzteiler 3, eine Phasenvergleichsschaltung 4 und einen festen Frequenzteiler 5 mit dem Oszillator 1 verkoppelt und liefert ein Trägersignal für einen Modulator 6, dem in an sich bekannter Weise die Modulationssignale I und Q zuführbar sind, im Sendeteil und für einen Mischer 7, der über einen Verstärker 8 die von einer nicht dargestellten Antenne empfangenen Signale erhält, im Empfangsteil.

Das Teilerverhältnis n des Frequenzteilers 3 kann zwischen 6405 und 7170 mit Hilfe eines Mikroprozessors 9 eingestellt werden. Durch die Teilung der Frequenz des Oszillators 1 bei 5 erfolgt der Phasenvergleich bei 4 mit Signalen, deren Frequenz 200 kHz beträgt. Dadurch bedeutet eine Inkrementierung des Teilerfaktors n jeweils einen Frequenzsprung von 200 kHz.

Eine Verkopplung des Ausgangssignals des Oszillators 1 mit dem in den empfangenen Signalen enthaltenen Systemtakt erfolgt mit Hilfe des Mikroprozessors 9, dem das Ausgangssignal des Oszillators 1 über einen Frequenzteiler 10 zugeführt wird und der ein Steuersignal über einen Digital/Analog-Wandler 11 zum Oszillator 1 leitet. Der Mikroprozessor 9 erhält bei Funkgeräten der in Frage kommenden Art in an sich bekannter Weise die demodulierten empfangenen Signale, aus denen er den Systemtakt zum Zwecke eines Vergleichs mit der vom Frequenzteiler 10 erzeugten Systemreferenzfrequenz ableitet.

Nach der Mischung der Signale I und Q mit dem Ausgangssignal des zweiten Oszillators 2 erfolgt eine weitere Mischung bei 12 mit dem Ausgangssignal des Oszillators 1. Je nachdem, ob das Funkgerät in einem GSM-Netz oder in einem 1,8-GHz-Netz verwendet werden soll, wird an den Ausgang des Mischers 12 eines der Bandfilter 13, 13' angeschlossen. Danach erfolgt bei 14 eine Verstärkung der Signale, die letztlich zur Antenne geführt werden.

Nach der Mischung mit dem Ausgangssignal des Oszillators 2 bei 7 wird empfangsseitig aus dem Mischprodukt mit Hilfe eines Bandfilters 15 eine Zwischenfrequenz von 474 kHz herausgefiltert, die anschließend bei 16 mit der Frequenz des Oszillators 1 gemischt wird. Das Mischprodukt wird über ein Bandfilter 17 geleitet, so daß sich eine zweite Zwischenfrequenz von 45 MHz bildet. Diese wird in einem Quadraturdemodulator 18 demoduliert, welchem die Signale I' und Q' entnehmbar sind. Ein für den Quadraturdemodulator 18 erforderlicher Träger von ebenfalls 45 MHz wird mit einem dritten steuerbaren Oszillator 19 erzeugt, der mit Hilfe einer Phasenvergleichsschaltung 20 und zwei Frequenzteilern 21, 22 mit dem Oszillator 1 verkoppelt ist.

Für die an den Bandgrenzen liegenden Sendefrequenzen ist die Frequenz des Oszillators 2 wie folgt einzustellen:

$$1319 \text{ MHz} - 429 \text{ MHz} = 890 \text{ MHz}$$

$$1344 \text{ MHz} - 429 \text{ MHz} = 915 \text{ MHz}$$

$$1281 \text{ MHz} + 429 \text{ MHz} = 1710 \text{ MHz}$$

$$1356 \text{ MHz} + 429 \text{ MHz} = 1785 \text{ MHz}$$

Zum Empfang der an den Bandgrenzen liegenden Frequenzen sind folgende Einstellungen des Oszillators 2 notwendig, wobei sich jeweils die gleiche Zwischenfrequenz von 474 MHz ergibt:

$$1409 \text{ MHz} - 935 \text{ MHz} = 474 \text{ MHz}$$

$$1434 \text{ MHz} - 960 \text{ MHz} = 474 \text{ MHz}$$

$$-1331 \text{ MHz} + 1805 \text{ MHz} = 474 \text{ MHz}$$

$$-1406 \text{ MHz} + 1880 \text{ MHz} = 474 \text{ MHz}$$

In die Frequenzregelung des Oszillators 1 mit Hilfe des Mikroprozessors 9, des Frequenzteilers 10 und des Digital/Analog-Wandlers 11 kann auch eine Temperaturkompensation einbezogen werden, wobei der Mikroprozessor anhand einer Temperaturmessung über einen Sensor 23 das Steuersignal in zweckmäßiger Weise beeinflußt.

Bei dem Funkgerät nach Fig. 1 wird der Oszillator 2 zwischen den jeweils zum Senden und zum Empfangen erforderlichen Frequenzen umgeschaltet. Dieses ist möglich, da bei den in Frage kommenden Systemen (beispielsweise GSM-Standard) die Zeitschlitze zum Senden und Empfangen zeitlich gegeneinander verschoben sind.

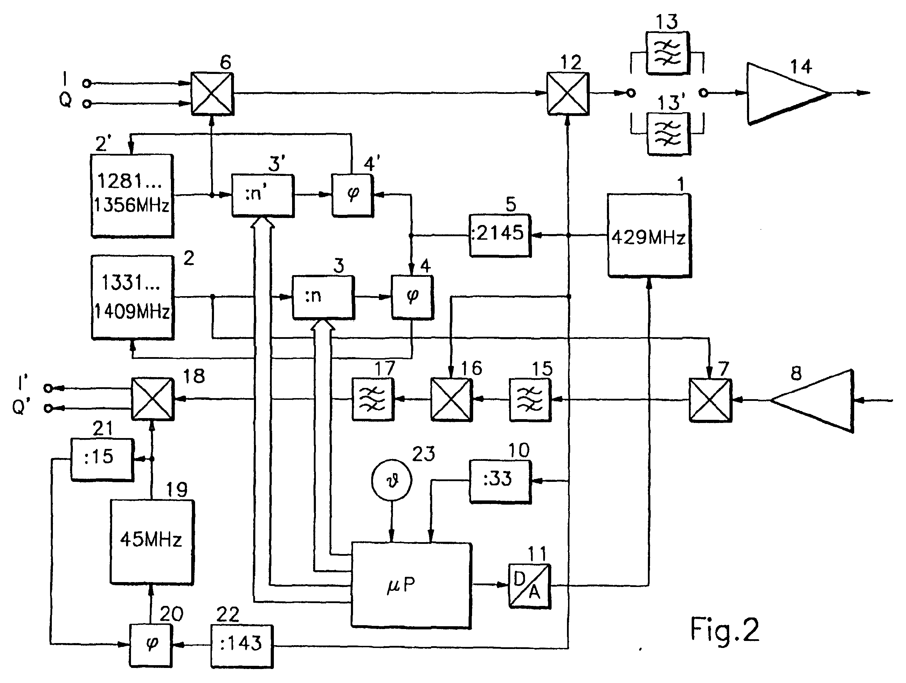

Bei dem Ausführungsbeispiel nach Fig. 2 ist jedoch zum Senden ein zweiter Oszillator 2, 2' vorgesehen. In entsprechender Weise sind auch zwei steuerbare Frequenzteiler 3, 3' und zwei Phasenvergleichsschaltungen 4, 4' angeordnet. Ansonsten entspricht das Ausführungsbeispiel nach Fig. 2 demjenigen nach Fig. 1.

Die Erfindung ist nicht auf die im Ausführungsbeispiel angegebenen Frequenzen beschränkt. So können beispielsweise andere vielfache von 13 MHz als 33 im Oszillator 1 erzeugt werden - beispielsweise 416 MHz, 390 MHz oder 351 MHz. Für die zweite Zwischenfrequenz ergeben sich dann Werte von 71 MHz, 90 MHz oder 133 MHz.

**Patentansprüche**

1. Funkgerät, das zum Senden und Empfangen in einem oberen und in einem unteren Frequenzband ausgelegt ist, wobei die zu sendenden und die empfangenen Signale auf Träger in den oberen und den unteren Frequenzbereich modulierte digitale Zeitmultiplexsignale mit einem Systemtakt sind, wobei die Frequenzen eines ersten Oszillators und mindestens eines zweiten Oszillatoren derart gewählt sind, daß eine Differenz der Frequenzen eine Sendefrequenz im unteren Frequenzbereich und eine Summe der Frequenzen eine Sendefrequenz im oberen Frequenzbereich ergibt, **gekennzeichnet dadurch**

   - **daß** der erste Oszillator ein steuerbarer Oszillator (1) ist, aus dessen Ausgangssignal durch Frequenzteilung eine Systemreferenzfrequenz abgeleitet wird, die zur Regelung der Frequenz des ersten steuerbaren Oszillators (1) mit dem Systemtakt der empfangenen Signale verglichen wird, und
   - **daß** der mindestens zweite steuerbare Oszillator (2, 2 min), der mit dem ersten steuerbaren Oszillator (1) verkoppelt und in durch ein Kanalraster bestimmten Schritten abstimmbar ist.

2. Funkgerät nach Anspruch 1, **dadurch gekennzeichnet, daß** zum Empfang eine Zwischenfrequenz als Differenz der Frequenz des empfangenen Signals und der Frequenz des zweiten steuerbaren Oszillators (2, 2') gebildet wird.

3. Funkgerät nach Anspruch 2, **dadurch gekennzeichnet, daß** durch Differenzbildung aus der Zwischenfrequenz und der Frequenz des ersten steuerbaren Oszillators (1) eine weitere Zwischenfrequenz erzeugt wird.

4. Funkgerät nach Anspruch 3, **dadurch gekennzeichnet, daß** das Signal mit der weiteren Zwischenfrequenz quadraturdemoduliert wird, wobei ein zur Quadraturdemodulation erforderlicher Referenzträger durch einen dritten steuerbaren Oszillator (19) erzeugt wird, der mit dem ersten steuerbaren Oszillator (1) verkoppelt ist.

5. Funkgerät nach einem der vorhergehenden Ansprüche, **dadurch gekennzeichnet, daß** der zweite steuerbare Oszillator (2, 2') mit Hilfe einer Phasenvergleichsschaltung (4, 4') steuerbar ist, welcher das durch einen ersten Frequenzteiler (5, 5') bezüglich der Frequenz geteilte Ausgangssignal des ersten steuerbaren Oszillators (1) und das durch einen zweiten Frequenzteiler (3, 3') bezüglich der Frequenz geteilte Ausgangssignal des zweiten steuerbaren Oszillators (2, 2') zuführbar ist.

**6.** Funkgerät nach Anspruch 5, **dadurch gekennzeichnet, daß** das Teilerverhältnis des zweiten Frequenzteilers (3, 3') steuerbar ist.

**7.** Funkgerät nach Anspruch 6, **dadurch gekennzeichnet, daß** die bezüglich der Frequenz geteilten der Phasenvergleichsschaltung (4, 4') zuführbaren Signale eine Frequenz entsprechend dem Kanalraster aufweisen.

**8.** Funkgerät nach einem der Ansprüche 6 oder 7, **dadurch gekennzeichnet, daß** zum Senden und zum Empfangen jeweils ein zweiter steuerbarer Oszillator (2, 2') mit je einer Phasenvergleichsschaltung (4, 4') und je einem zweiten Frequenzteiler (3, 3') vorgesehen ist.

**9.** Funkgerät nach einem der vorhergehenden Ansprüche, **dadurch gekennzeichnet, daß** zur Regelung der Frequenz des ersten steuerbaren Oszillators (1) ein Mikroprozessor (9) durch Vergleich zwischen dem Systemtakt des empfangenen Signals und der Systemreferenzfrequenz und durch Temperaturmessung ein Steuersignal für den ersten steuerbaren Oszillator (1) erzeugt, das über einen Digital/Analog-Wandler (11) dem ersten steuerbaren Oszillator (1) zuführbar ist.

**10.** Funkgerät nach einem der vorhergehenden Ansprüche mit einem unteren Frequenzbereich von 890 MHz bis 915 MHz zum Senden und von 935 MHz bis 960 MHz zum Empfangen und mit einem oberen Frequenzbereich von 1710 MHz bis 1785 MHz zum Senden und von 1805 MHz bis 1880 MHz zum Empfangen und mit einem Systemtakt von 13 MHz, **dadurch gekennzeichnet, daß** die Frequenz des ersten steuerbaren Oszillators (1) ein ganzzahliges Vielfaches von 13 MHz ist, vorzugsweise das 33-fache.

**Claims**

**1.** Radio device which is designed to transmit and receive in an upper and in a lower frequency band, with the signals to be transmitted and received being digital time-division multiplex signals with an internal clock, the signals being modulated on carriers in the upper and the lower frequency ranges, with the frequencies of a first oscillator and at least a second oscillator being selected such that a difference between the frequencies produces a transmission frequency in the lower frequency range and a sum of the frequencies produces a transmission frequency in the upper frequency range,
**characterized in that**

- the first oscillator is a controllable oscillator (1), from the output signal of which a system reference frequency is derived by frequency division, which for controlling the frequency of the first controllable oscillator (1), is compared with the internal clock of the received signals, and
- the at least second controllable oscillator (2, 2min), is coupled to the first controllable oscillator (1) and can be adjusted in steps determined by a channel spacing.

**2.** Radio device according to claim 1,
**characterised in that**
for receiving purposes an intermediate frequency is formed as the difference between the frequency of the received signal and the frequency of the second controllable oscillator (2, 2').

**3.** Radio device according to claim 2,
**characterised in that**
a further intermediate frequency is generated by formation of the difference between the intermediate frequency and the frequency of the first controllable oscillator (1).

**4.** Radio device according to claim 3, **characterized in that**, the signal is quadrature modulated with the further intermediate frequency, with a reference carrier required for the quadrature modulation being generated by a third controllable oscillator (19) which is coupled to the first controllable oscillator (1).

**5.** Radio device according to one of the preceding claims, **characterised in that**, the second controllable oscillator (2, 2') can be controlled with the aid of a phase comparison circuit (4, 4'), which can be fed the divided output signal of the first controllable oscillator (1) by a first frequency divider (5, 5') in respect of the frequency, and the divided output signal of the second controllable oscillator (2, 2') by a second frequency divider (3, 3') in respect of the frequency.

**6.** Radio device according to claim 5, **characterised in that**, the divider ratio of the second frequency divider (3, 3') can be controlled.

**7.** Radio device according to claim 6, **characterised in that** the signals which can be fed to the phase comparison circuit (4, 4') divided in respect of the frequency, comprise a frequency corresponding to the channel spacing.

**8.** Radio device according to one of claims 6 or 7, **characterized in that** a second controllable oscillator (2, 2') with a phase comparison circuit (4, 4') and a second frequency divider (3, 3') in each instance is provided for transmitting and receiving purposes.

**9.** Radio device according to one of the preceding claims,
**characterised in that**
in order to control the frequency of the first controllable oscillator (1), a microprocessor (9) generates a control signal for the first controllable oscillator (1) by comparison between the internal clock of the received signal and the system reference frequency and by temperature measurement, said control signal being able to be supplied to the first controllable oscillator (1) by means of a digital/analogue converter (11).

**10.** Radio device according to one of the preceding claims with a lower frequency range of 890 MHz to 915 MHz for transmitting and 935 MHz to 960 MHz for receiving and with an upper frequency range of 1710 MHz to 1785 MHz for transmitting and of 1805 MHz to 1880 MHz for receiving and with an internal clock of 13 MHz, **characterized in that** the frequency of the first controllable oscillator (1) is an integral multiple of 13 MHz, preferably 33-fold.

**Revendications**

**1.** Appareil radio qui est conçu pour émettre et recevoir dans une bande de fréquence supérieure et dans une bande de fréquence inférieure, les signaux à émettre et les signaux à recevoir étant des signaux numériques multiplexés dans le temps, modulés sur des porteurs dans la gamme de fréquence supérieure et dans la gamme de fréquence inférieure avec une cadence système, les fréquences d'un premier oscillateur et d'au moins un deuxième oscillateur étant sélectionnées de telle manière qu'une différence entre les fréquences donne une fréquence d'émission dans la gamme de fréquence inférieure et qu'une somme des fréquences donne une fréquence d'émission dans la gamme de fréquence supérieure,
**caractérisé en ce**

- **que** le premier oscillateur est un oscillateur commandable (1), à partir du signal de sortie duquel est dérivée une fréquence de référence système par division de fréquence, qui, pour le réglage de la fréquence du premier oscillateur commandable (1), est comparée à la cadence système des signaux reçus et
- en ce que l'au moins deuxième oscillateur commandable (2, 2'), qui est raccordé au premier oscillateur commandable (1), est accordable par étapes déterminées au moyen d'une trame de canaux.

**2.** Appareil radio selon la revendication 1, **caractérisé en ce qu'**une fréquence intermédiaire est formée pour la réception en tant que différence entre la fréquence du signal reçu et la fréquence du deuxième oscillateur commandable (2, 2').

**3.** Appareil radio selon la revendication 2, **caractérisé en ce qu'**une fréquence intermédiaire supplémentaire est créée en formant la différence entre la fréquence intermédiaire et la fréquence du premier oscillateur commandable (1).

**4.** Appareil radio selon la revendication 3, **caractérisé en ce que** le signal est démodulé en quadrature au moyen de la fréquence intermédiaire supplémentaire, un porteur de référence nécessaire à la démodulation en quadrature étant créé par un troisième oscillateur commandable (19) qui est raccordé au premier oscillateur commandable (1).

**5.** Appareil radio selon l'une quelconque des revendications précédentes, **caractérisé en ce que** le deuxième oscillateur commandable (2, 2') peut être commandé à l'aide d'un circuit de comparaison de phases (4, 4') auquel peuvent être amenés le signal de sortie du premier oscillateur commandable (1), divisé par un premier diviseur de fréquence (5, 5') en ce qui concerne la fréquence, et le signal de sortie du deuxième oscillateur commandable (2, 2'), divisé par un deuxième diviseur de fréquence (3, 3') en ce qui concerne la fréquence.

6. Appareil radio selon la revendication 5, **caractérisé en ce que** le rapport de division du deuxième diviseur de fréquence (3, 3') est commandable.

7. Appareil radio selon la revendication 6, **caractérisé en ce que** les signaux divisés en ce qui concerne la fréquence et pouvant être amenés au circuit de comparaison de phases (4, 4') présentent une fréquence correspondant à la trame de canaux.

8. Appareil radio selon l'une quelconque des revendications 6 ou 7, **caractérisé en ce qu'**un deuxième oscillateur commandable (2, 2'), comprenant un circuit de comparaison de phases (4, 4') et un deuxième diviseur de fréquence (3, 3'), est respectivement prévu pour émettre et recevoir.

9. Appareil radio selon l'une quelconque des revendications précédentes, **caractérisé en ce qu'**un microprocesseur (9) génère, par comparaison entre la cadence système du signal reçu et la fréquence de référence système et par mesure de la température, un signal de commande pour le premier oscillateur commandable (1) afin de régler la fréquence du premier oscillateur commandable (1), ce signal de commande pouvant être amené au premier oscillateur commandable (1) par l'intermédiaire d'un convertisseur numérique-analogique (11).

10. Appareil radio selon l'une quelconque des revendications précédentes, avec une gamme de fréquence inférieure de 890 MHz à 915 MHz pour émettre et de 935 MHz à 960 MHz pour recevoir et avec une gamme de fréquence supérieure de 1710 MHz à 1785 MHz pour émettre et de 1805 MHz à 1880 MHz pour recevoir et avec une cadence système de 13 MHz, **caractérisé en ce que** la fréquence du premier oscillateur commandable (1) est un multiple à chiffre entier de 13 MHz, de préférence de 33 fois supérieur.

Fig.1

Fig.2